# EUROPÄISCHE PATENTSCHRIFT

(11) **EP 3 088 759 B1**
(45) Veröffentlichungstag und Bekanntmachung des Hinweises auf die Patenterteilung: **02.10.2019**
(21) Anmeldenummer: 16165321.7
(22) Anmeldetag: 14.04.2016
(51) Int. Cl.: F16D 3/84

(54) **SCHUTZANORDNUNG FÜR EINE GELENKWELLE**
PROTECTION DEVICE FOR A DRIVE SHAFT
SYSTEME DE PROTECTION POUR UN ARBRE DE TRANSMISSION

(30) Priorität: 29.04.2015 DE 102015106697
(43) Veröffentlichungstag der Anmeldung: 02.11.2016
(73) Patentinhaber: Walterscheid GmbH, 53797 Lohmar (DE)
(72) Erfinder: HECTOR, Martin, 53721 Siegburg (DE); ADAMEK, Wolfgang, 53797 Lohmar (DE); KÖRBER, Stefan, 50259 Pulheim (DE)
(74) Vertreter: Neumann Müller Oberwalleney & Partner Patentanwälte

(56) Entgegenhaltungen:
- EP-A1- 1 894 457
- FR-A1- 2 935 866
- US-A- 4 324 533
- US-A- 4 702 724

## Beschreibung

Die Erfindung betrifft eine Schutzanordnung für eine Gelenkwellenach dem Oberbegriff des Anspruchs 1.

Schutzanordnungen werden vorzugsweise im Zusammenhang mit Kreuzgelenkwellen eingesetzt, die zum Antrieb von Aggregaten in landwirtschaftlichen Geräten dienen. Die Kreuzgelenkwellen dienen zur Drehmomentübertragung des Drehmoments von einem Hauptantriebsstrang zu einem Nebenantrieb bzw. einzelnen Aggregaten. Ebenso werden Kreuzgelenkwellen zum Antrieb von landwirtschaftlichen Geräten eingesetzt, wobei sie zwischen einer Zapfwelle eines Traktors und einem Antriebszapfen des Gerätes angeordnet sind. Kreuzgelenkwellen umfassen zwei Kreuzgelenke und eine diese verbindende, entlang einer Längsachse teleskopierbare Verbindungswelle. Die Schutzanordnung dient als Berührungsschutz für die darin rotierende gelagerte Gelenkwelle. Die Schutzanordnung umfasst meist je Kreuzgelenk einen Schutztrichter und dazwischen angeordneten und entlang der Längsachse zueinander verschiebbare Schutzrohrelemente, wobei jeweils ein Schutztrichter und ein Schutzrohrelement durch eine Lagerung an einem Kreuzgelenk drehbar und axial unverschiebbar festgelegt sind.

Eine Schutzanordnung der eingangs genannten Art ist aus der FR 2 935 866 A1 bekannt. Die dort in einer Ausführungsform gezeigte Schutzanordnung umfasst eine Schutzvorrichtung mit einem Schutztrichter, der an ein Rohr der Schutzanorndung einstückig angeformt ist und nicht flexibel ist. Der Schutztrichter dient zur Aufnahme eines Gelenks einer Gelenkwelle. Um beim Abwinkeln der Gelenkwelle auch ein Abwinkeln der Schutzanordnung zu gewährleisten, sind an dem Trichter zwei nach innen weisende Bolzen befestigt. Einer erster der Bolzen greift in eine Bohrung in einem Schutztopf ein, der fest mit einem feststehenden Bauteil verbunden ist. Ein zweiter der beiden Bolzen greift in einen Schlitz des Schutztopfes ein. Somit kann zur Montage der erste Bolzen durch Kippen des Schutztrichters gegenüber dem Schutztopf in die Bohrung des Schutztopfs eingeführt werden. Durch Zurückkippen in eine gestreckte Position der Schutzvorrichtung relativ zum Schutztropf tauch der zweite Bolzen axial in den Schlitz des Schutztopfs ein. Die Bolzen sind auf einer gemeinsamen Achse und koaxial zu einer Schwenkachse des Gelenks angeordnet, so dass ein Abwinkeln der Schutzanordnung beim Abwinkeln des Gelenks zu gewährleisten. Hierbei ist durch den ersten Bolzen, der in der Bohrung sitzt, gewährleistet, dass die Schutzvorrichtung nicht axial zum Schutztopf verschoben wird.

Bei anderen bekannten Schutzvorrichtungen wird diese beispielsweise über eine Kette mit einem Fixpunkt des Gerätes verbunden und somit festgelegt, wie dies in der DE 10 2010 000 900 A1 gezeigt ist. Da die Gelenkwelle über Lagerungen in der Schutzvorrichtung drehbar gelagert ist, würde sich, insbesondere bei weit verbreiteten Gleitlagerungen, die Schutzvorrichtung aufgrund von Schleppmomenten mitdrehen. Dies wird durch den Einsatz der Kette verhindert. Hierbei kann die Schutzvorrichtung lediglich solange mit der Gelenkwelle mitdrehen, bis die Kette gespannt ist und ein weiteres Drehen der Schutzvorrichtung verhindert.

EP 0 908 083 B1 beschreibt ein Schutzanordnung der eingangs genannten Art. Einer der beiden Schutztrichter der Schutzvorrichtung ist hierbei an einem axialen Ende mit einer Hülse fest verbunden, die als Versteifung des Schutztrichters dient, da der Schutztrichter als elastischer Faltenbalg gestaltet ist. Die Hülse ist über Schrauben mit einem trichterförmigen Abschnitt des Schutztrichters verbunden. Die Hülse lässt sich axial außen auf den Schutztopf aufschieben. Um eine drehfeste Verbindung zwischen der Hülse, und damit dem Schutztrichter, einerseits und dem Schutztopf andererseits zu gewährleisten, weist die Hülse umfangsverteilt Keilvorsprünge auf, die nach innen vorragen. In dem Schutztopf sind entsprechend gestaltete umfangsverteilte Nuten vorgesehen, in welche die Keilvorsprünge eingreifen. Die Keilvorsprünge und die Nuten verlaufen parallel zu einer Längsachse, so dass die Hülse axial auf den Schutztopf aufgeschoben werden kann und axiale Relativbewegungen zum Schutztopf ausführen kann, um zum Beispiel beim Abbeugen des Gelenks der Verformung des Schutztrichters zu folgen.

Aus der EP 0 173 898 B1 ist eine Schutzvorrichtung für eine Antriebswelle eines Vorderradantriebs eines Ackerschleppers bekannt. Die Schutzvorrichtung umfasst ein Schutzrohr, das sich koaxial zur Antriebswelle erstreckt und eine zylindrische Lagerhülse aufnimmt und somit auf dieser gelagert ist, wohingegen die Lagerhülse an einen Bereich eines Getriebegehäuses angeschraubt ist. Das Schutzrohr weist an einem zur Lagerhülse weisenden Ende eine offene halbkreisförmige Ausrichtöffnung auf, die im Bereich einer Gewindebohrung der Lagerhülse zu liegen kommt. In die Gewindebohrung wird ein Halteelement mit einer Arretierscheibe geschraubt, um das Schutzrohr axial und tangential zu arretieren.

Aufgabe der vorliegenden Erfindung ist es, eine Schutzanordnung vorzuschlagen, die gegen Drehen gesichert ist und möglichst einfach aufgebaut ist.

Die Aufgabe wird erfindungsgemäß durch eine Schutzanordnung gemäß Anspruch 1 gelöst.

Vorteil bei dieser Ausbildung ist, dass die Schutzanordnung eine geringe Anzahl von Bauteilen aufweist und einfach aufgebaut ist. Zudem lassen sich herkömmliche Werkzeuge zur Herstellung der einzelnen Bauteile der Schutzanordnung nutzen, wobei nachträgliche Änderungen in weiteren Herstellungsschritten einfach vorgenommen werden können, wie zum Beispiel die Ausbildung der Mitnehmerausnehmungen. Ferner ist auch ein Nachrüsten bereits im Betrieb befindlicher Schutzanordnungen bei der vorliegenden Ausbildung grundsätzlich denkbar.

Der zumindest eine Mitnehmer ist Bestandteil eines Mitnehmerrings, der am Schutztrichter festgelegt ist. Der Mitnehmerring kann als geschlossener Ring gestaltet sein, an dem der zumindest eine Mitnehmer radial vorstehend angeordnet ist. Der Mitnehmerring kann auch geschlitzt, zum Beispiel C-förmig, gestaltet sein, so dass er in radialer Richtung zur Längsachse auf den Schutztrichter aufgesteckt werden kann. Bei dieser Gestaltung sollte sich der Ring über mehr als 180 Grad über den Umfang erstrecken, so dass der Mitnehmerring sicher auf dem Schutztrichter gehalten ist.

Vorzugsweise ist die erste Mitnehmerausnehmung im Schutztrichter als Bohrung gestaltet. Diese lässt sich einfach in die Schutztrichter einbringen, ohne Werkzeuge zur Herstellung der Schutztrichter, zum Beispiel Spritzgießwerkzeuge, verändern zu müssen. Darüber hinaus können entsprechende Bohrungen auch nachträglich in bereits verwendete Schutztrichter eingebracht werden.

Die als Schlitz gestaltete zweite Mitnehmerausnehmung lässt sich einfach in bestehende Konstruktionen oder sogar in bereits verwendete Schutztöpfe einbringen. Häufig sind solche Schlitze im Schutztopf jedoch bereits vorhanden, um den Verschluss der Gelenkgabel der Gelenkwelle, mit dem diese mit einem Antriebszapfen verbunden wird, bedienen zu können.

Der Schutztopf weist vorzugsweise eine umlaufende Wand mit einem an einem axialen Ende des Schutztopfs ausgebildeten Rand auf, wobei sich der Schlitz ausgehend von dem Rand axial erstreckt. Somit können bei der Montage der Schutzvorrichtung auf den Schutztopf die Mitnehmer axial in den Schlitz eingeführt werden. In diesem Fall findet keine axiale Abstützung der Schutzvorrichtung gegenüber dem Schutztopf statt, sondern lediglich eine Abstützung in Umfangsrichtung gegen Verdrehen der Schutzvorrichtung gegenüber dem Schutztopf.

Vorzugsweise durchdringt der Schlitz die Wand in radialer Richtung. Alternativ ist es auch denkbar, dass der Schlitz die Wand nicht vollständig durchdringt und als Nut in einer Außenumfangsfläche der Wand ausgebildet ist.

Der Schutztrichter ist vorzugsweise zumindest teilweise als Faltenbalg gestaltet. Hierbei kann der Mitnehmerring zwischen zwei axial benachbarten Falten des Faltenbalgs aufgenommen sein, so dass dieser sowohl durch den Mitnehmer in der ersten Mitnehmerausnehmung als auch durch die beiden Falten in axialer Richtung gesichert ist. Eine Sicherung des Mitnehmerrings in Umfangsrichtung ist durch den zumindest einen Mitnehmer gegeben, der in die erste Mitnahmeausnehmung des Schutztrichters eingreift. Hierdurch lässt sich der Mitnehmerring auf dem Schutztrichter werkseitig vormontieren.

Ein bevorzugtes Ausführungsbeispiel wird im Folgenden anhand der Zeichnungen näher erläutert. Hierin zeigen
- Figur 1: einen Traktor mit einem daran angehängten Gerät, das über eine mit einer Schutzanordnung versehenen Gelenkwelle angetrieben ist;
- Figur 2: einen Teillängsschnitt der Schutzanordnung und Gelenkwelle gemäß Figur 1;
- Figur 3: einen Teillängsschnitt der Schutzanordnung ohne Gelenkwelle gemäß Figur 2, und
- Figur 4: eine Explosionsdarstellung wesentlicher Bauteile der Schutzanordnung.

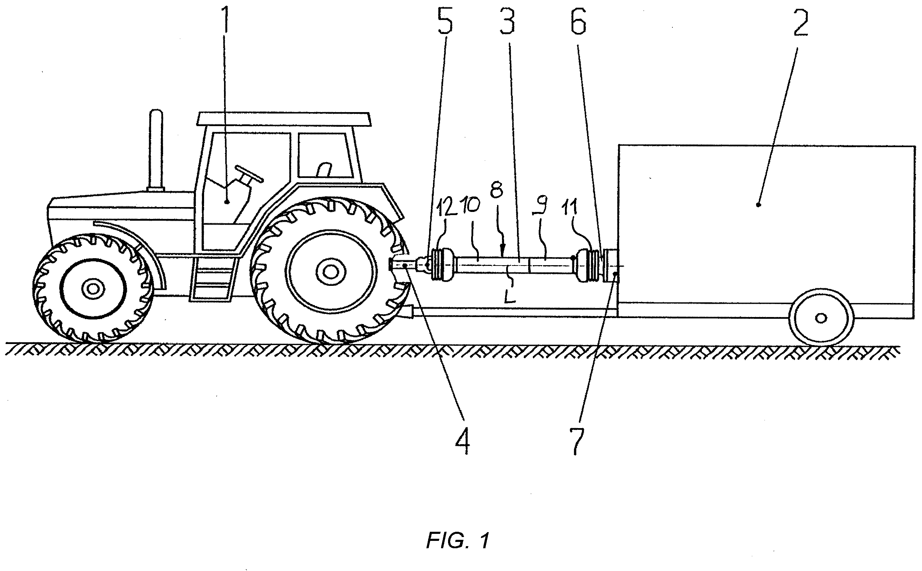

Figur 1 zeigt einen Traktor 1 mit einem angehängten Gerät 2. Das Gerät 2 ist mittels einer Gelenkwelle 5 mit einer Schutzvorrichtung 3 von der Zapfwelle 4 des Traktors angetrieben. Hierzu ist die Gelenkwelle 5 auf die Zapfwelle 4 aufgesteckt und mit dieser verbunden. Geräteseitig ist die Gelenkwelle 5 ebenfalls mit einem Antriebselement eines Getriebes 7 antriebsverbunden.

Die Schutzvorrichtung 3 weist ein Schutzrohr 8 auf, das ein erstes Schutzrohrelement 9 und ein zweites Schutzrohrelement 10 umfasst, die sich entlang einer Längsachse L erstrecken und zu dieser teleskopierbar angeordnet sind. Das erste Schutzrohrelement 9 ist mit einem geräteseitigen Schutztrichter 11 verbunden. Das zweite Schutzrohrelement 10 ist mit einem traktorseitigen Schutztrichter 12 verbunden. Die beiden Schutztrichter 11, 12 umschließen jeweils ein Kreuzgelenk der Gelenkwelle 5.

Wie nachfolgend noch erläutert wird, ist die Schutzvorrichtung 3 drehgelagert auf der Gelenkwelle 5 angeordnet. Damit das erste Schutzrohrelement 9 nicht mit der Gelenkwelle 5 mitdreht, ist der geräteseitige Schutztrichter 11 drehfest mit einem Schutztopf 6 verbunden, wobei der Schutztopf 6 an dem Getriebe 7 befestigt ist. Alternativ oder zusätzlich kann der traktorseitige Schutztrichter 12 über einen Schutztopf drehfest gegen ein Bauteil des Traktors 1 abgestützt sein. Insbesondere, wenn die beiden Schutzrohrelemente 9, 10 nicht drehfest miteinander verbunden sind, ist eine Abstützung des traktorseitigen Schutztrichters 12 und des geräteseitigen Schutztrichters 11 gegenüber feststehenden Bauteilen des Traktors 1 bzw. des Geräts 2 erforderlich.

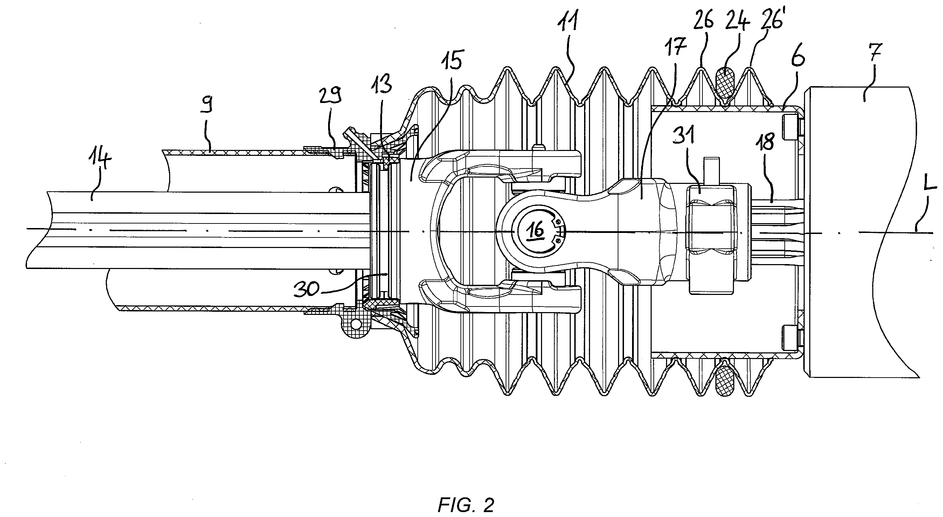

Figur 2 zeigt einen Längsschnitt der Gelenkwelle 5 mit Schutzvorrichtung 3 im Bereich des geräteseitigen Schutztrichters 11. Das erste Schutzrohrelement 9 ist über einen Adapterring 29 mit einem Gleitring 13 verbunden, der in eine Nut 30 in einer mit einem Rohr 14 der Gelenkwelle 5 verbundenen Innengabel 15 eingreift und drehbar gelagert ist. Die Innengabel 15 ist über eine Zapfenkreuzgarnitur 16 mit einer Außengabel 17 der Gelenkwelle 5 in allgemein bekannter Weise antriebsmäßig verbunden. Die Außengabel 17 ist über einen Verschluss 31 mit einer Antriebswelle 18 zum Beispiel eines Getriebes 7 und eines Gehäuseteils drehfest verbunden.

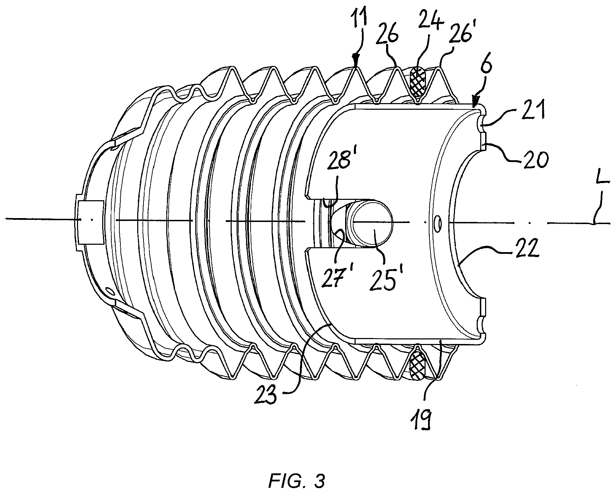

Der geräteseitige Schutztrichter 11 ist drehfest mit dem Gleitring 13 verbunden. Um zu verhindern, dass aufgrund von Schleppmomenten, die von der drehenden Gelenkwelle 5 über den Gleitring 13 auf die Schutzvorrichtung 3 einwirken, die das erste Schutzrohrelement 9 mit dreht, ist der geräteseitige Schutztrichter 11 drehfest mit dem Schutztopf 6 verbunden, wobei der Schutztopf 6 derart gestaltet ist, dass er mit einem Gehäuse des Getriebes 7 fest verbunden werden kann. Der Schutztopf 6 weist, wie in Figur 3 erkenntlich ist, eine koaxial zur Längsachse L umlaufend angeordnete Wand 19 auf, die im vorliegenden Fall zylindrisch gestaltet ist. Die Wand 19 kann jedoch grundsätzlich auch eine konische oder andere Form aufweisen. An einem geräteseitigen Ende weist der Schutztopf 6 einen Befestigungsflansch 20 mit Befestigungsbohrungen 21 auf, über den der Schutztopf 6 mit einem Gehäuse des Getriebes 7 oder einem anderen Gehäuseteil verbunden werden kann. Der Befestigungsflansch 20 bildet eine zentrale Durchgangsöffnung 22, durch die die Antriebswelle 18 des Getriebes 7 hindurchgeführt werden kann.

Auf dem vom Befestigungsflansch 20 abgewandten axialen Ende bildet die Wand 19 einen Rand 23. Der Rand 23 bildet eine Öffnung, in die die Außengabel 11 der Gelenkwelle 5 eingeführt werden kann.

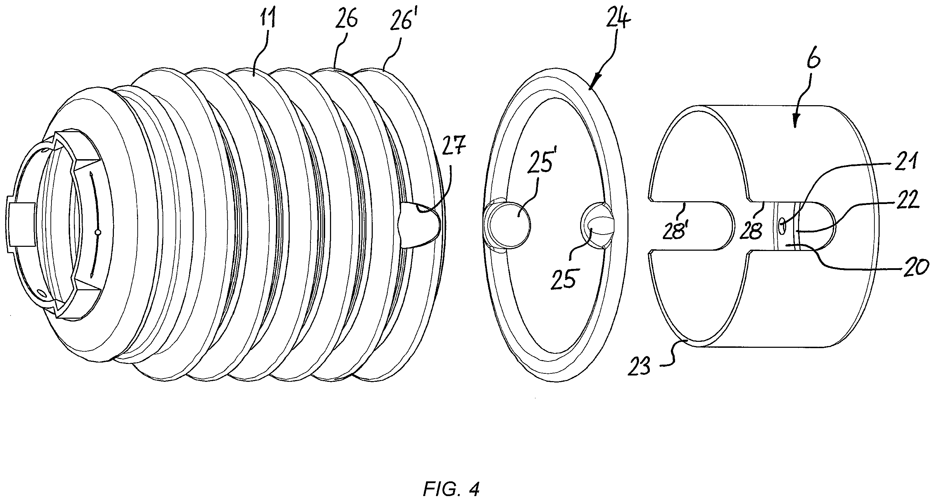

Zur drehfesten Verbindung ist ein Mitnehmerring 24 vorgesehen. Aus Figur 4, welche eine Explosionsdarstellung des geräteseitigen Schutztrichters 11, des Mitnehmerrings 24 und des Schutztopfs 6 zeigt, wird deutlich, dass der Mitnehmerring 24 über den Umfang geschlossen ist und zwei Mitnehmer 25, 25' aufweist, die radial nach innen vorstehen.

Der geräteseitige Schutztrichter 11 ist in Form eines Faltenbalgs mit einer Mehrzahl von axial nebeneinander angeordneten Falten 26, 26' ausgebildet. Die Falten 26, 26' sind um die Längsachse L umlaufend angeordnet. Zwischen zwei direkt benachbarten Falten 26, 26' ist der Mitnehmerring 24 aufgenommen, so dass dieser axial zwischen den beiden Falten 26, 26' gehalten ist.

In dem geräteseitigen Schutztrichter 11 sind erste Mitnahmeausnehmungen 27, 27' vorgesehen, die den geräteseitigen Schutztrichter 11 radial durchdringen. Die ersten Mitnahmeausnehmungen 27, 27' sind in Form von Bohrungen gestaltet und befinden sich zwischen den beiden Falten 26, 26', zwischen denen der Mitnahmering aufgenommen ist. Die Mitnehmer 25, 25' ragen hierbei von außen jeweils durch eine der Mitnahmeausnehmungen 27, 27' hindurch und stehen nach innen radial vor.

In dem Schutztopf 6 sind zwei zweite Mitnahmeausnehmungen 28, 28' vorgesehen. Die zweiten Mitnahmeausnehmungen 28, 28' sind als Schlitze in der Wand 19 ausgebildet, wobei die Schlitze vom Rand 23 der Wand 19 sich axial erstreckend ausgehen. Im montierten Zustand ragen die Mitnehmer 25, 25' in die zweiten Mitnahmeausnehmungen 28, 28' radial hinein. Somit stützen sich die Mitnehmer 25, 25' in Umfangsrichtung gegen den Schutztopf 6 ab. Darüber hinaus ist der geräteseitige Schutztrichter 11 in Umfangsrichtung gegen die Mitnehmer 25, 25' abgestützt, so dass der geräteseitige Schutztrichter 11 und damit die gesamte Schutzvorrichtung 3 drehfest gegenüber dem Schutztopf 6 abgestützt ist. Schleppmomente, die von der Gelenkwelle 5 über den Gleitring 13 in die Schutzvorrichtung 3 eingeführt werden, werden somit über die Mitnehmer 25, 25' und den Schutztopf 6 abgestützt.

Da die zweiten Mitnahmeausnehmungen 28, 28' vom Rand 23 der Wand 19 sich axial erstreckend ausgehen, kann zur Montage der Gelenkwelle 5 an dem Getriebe 7 oder an einem Gehäuseteil der Schutztrichter 11 einfach mit dem vormontierten Mitnahmering 24 auf den Schutztopf 6 aufgeschoben werden, wobei die Mitnehmer 25, 25' axial in die schlitzförmigen zweiten Mitnahmeausnehmungen 28, 28' eintauchen.Bezugszeichenliste
- 1: Traktor
- 2: Gerät
- 3: Schutzvorrichtung
- 4: Zapfwelle
- 5: Gelenkwelle
- 6: Schutztopf
- 7: Getriebe
- 8: Schutzrohr
- 9: erstes Schutzrohrelement
- 10: zweites Schutzrohrelement
- 11: geräteseitiger Schutztrichter
- 12: traktorseitiger Schutztrichter
- 13: Gleitring
- 14: Rohr
- 15: Innengabel
- 16: Zapfenkreuzgarnitur
- 17: Außengabel
- 18: Antriebswelle
- 19: Wand
- 20: Befestigungsflansch
- 21: Befestigungsbohrung
- 22: Durchgangsöffnung
- 23: Rand
- 24: Mitnehmerring
- 25, 25': Mitnehmer
- 26, 26': Falte
- 27, 27': erste Mitnahmeausnehmung
- 28, 28': zweite Mitnahmeausnehmung
- 29: Adapterring
- 30: Nut
- 31: Verschluss

- L: Längsachse

## Patentansprüche

1. Schutzanordnung für eine Gelenkwelle (5), wobei die Schutzanordnung folgendes aufweist:
eine Schutzvorrichtung (3), die sich entlang einer Längsachse (L) erstreckt, die zur drehenden Aufnahme einer Gelenkwelle (5) ausgebildet ist und die zumindest einen Schutztrichter (11) aufweist, und
ein Schutztopf (6), der zur Befestigung an einem feststehenden Bauteil (7) ausgebildet ist, wobei der Schutztrichter (11) den Schutztopf (6) zumindest teilweise axial überlappend aufnimmt,
zumindest einen Mitnehmer (25, 25'), der außen am Schutztrichter (11) festgelegt ist,
wobei der zumindest eine Mitnehmer (25, 25') in eine erste Mitnahmeausnehmung (27, 27') im Schutztrichter (11) und in eine zweite Mitnahmeausnehmung (28, 28') im Schutztopf (6) radial eingreift und den Schutztrichter (11) und den Schutztopf (6) in Umfangsrichtung gegeneinander abstützt, und
wobei die zweite Mitnahmeausnehmung (28, 28') im Schutztopf (6) als Schlitz gestaltet ist,
**dadurch gekennzeichnet,**
**dass** der Mitnehmer (25, 25') Teil eines Mitnehmerrings (24) ist, der am Schutztrichter (11) festgelegt ist.

2. Schutzanordnung nach Anspruch 1,
**dadurch gekennzeichnet,**
**dass** die erste Mitnahmeausnehmung (27, 27') im Schutztrichter (11) als Bohrung gestaltet ist.

3. Schutzanordnung nach Anspruch 1,
**dadurch gekennzeichnet,**
**dass** der Schutztopf (6) eine umlaufende Wand (19) mit einem an einem axialen Ende des Schutztopfes (6) ausgebildeten Rand (23) aufweist und dass sich die zweite Mitnahmeausnehmung in Form des Schlitzes (28, 28') ausgehend von dem Rand (23) axial erstreckt.

4. Schutzanordnung nach Anspruch 3,
**dadurch gekennzeichnet,**
**dass** die zweite Mitnahmeausnehmung in Form des Schlitzes (28, 28') die Wand (19) radial durchdringt.

5. Schutzanordnung nach einem der vorangehenden Ansprüche,
**dadurch gekennzeichnet,**
**dass** der Schutztrichter (11) zumindest teilweise als Faltenbalg gestaltet ist und
**dass** der Mitnehmerring (24) zwischen zwei axial benachbarten Falten (26, 26') des Faltenbalgs aufgenommen ist.

## Claims

1. Protection arrangement for a universal joint shaft (5), wherein the protection arrangement has the following:
a protection device (3), extending along a longitudinal axis (L), and being formed for accommodating rotatingly a universal joint shaft (5) and having at least one protection cone (11), and
a protection pot (6), formed to be attached to a stationary component (7), wherein the protection cone (11) accommodates the protection pot (6) at least partially in an axially overlapping manner,
at least one driver (25, 25'), which is retained at the outside on the protection cone (11), and
wherein at least one driver (25, 25') engages radially in a first driver recess (27, 27') in the protection cone (11) and in a second driver recess (28, 28') in the protection pot (6) and supports the protection cone (11) and the protection pot (6) in circumferential direction against one another,
wherein the second driver recess (28, 28') is formed in the protection pot (6) as a slot,
**characterized in**
**that** the driver (25, 25') is part of a driving ring (24), which is retained on the protection cone (11).

2. Protection arrangement according to claim 1,
**characterized in**
**that** the first driver recess (27, 27') is formed in the protection cone (11) as a bore.

3. Protection arrangement according to claim 1,
**characterized in**
**that** the protection pot (6) has a circumferentially extending wall (19) with an edge (23) formed at an axial end of the protection pot (6) and
**that** the second driver recess extends axially in form of a slot (28, 28') starting from the edge (23).

4. Protection arrangement according to claim 3,
**characterized in**
**that** the second driver recess formed as the slot (28, 28') radially extends through the wall (19).

5. Protection arrangement according to one of the preceding claims,
**characterized in**
**that** the protection cone (11) is formed at least partially as convoluted boot and that the driving ring (24) is accommodated between two axially adjacent folds (26, 26') of the convoluted boot.

## Revendications

1. Ensemble de protection pour un arbre de transmission (5), l'ensemble de protection comportant :
un dispositif de protection (3), qui s'étend le long d'un axe longitudinal (L), qui est conçu pour recevoir en rotation un arbre de transmission (5) et qui comporte au moins un bol de protection (11), et
un barillet de protection (6), qui est conçu pour être fixé sur un élément (7) stationnaire, le bol de protection (11) recevant le barillet de protection (6) en le chevauchant au moins partiellement en direction axiale,
au moins un entraîneur (25, 25'), qui est fixé à l'extérieur sur le bol de protection (11),
l'au moins un entraîneur (25, 25') s'engageant en direction radiale dans un premier évidement d'entraînement (27, 27') dans le bol de protection (11) et dans un deuxième évidement d'entraînement (28, 28') dans le barillet de protection (6) et supportant l'un contre l'autre en direction périphérique le bol de protection (11) et le barillet de protection (6), et
le deuxième évidement d'entraînement (28, 28') dans le barillet de protection (6) étant conçu sous la forme d'une fente, **caractérisé en ce que** l'entraîneur (25, 25') est une partie d'une bague d'entraînement (24) qui est fixée sur le bol de protection (11).

2. Ensemble de protection selon la revendication 1, **caractérisé en ce que** le premier évidement d'entraînement (27, 27') dans le bol de protection (11) est conçu sous la forme d'un perçage.

3. Ensemble de protection selon la revendication 1, **caractérisé**
**en ce que** le barillet de protection (6) comporte une paroi (19) périphérique, pourvue d'un bord (23) conçu sur l'extrémité axiale du barillet de protection (6) et
**en ce que** le deuxième évidement d'entraînement sous la forme de fente (28, 28') s'étend en direction axiale à partir du bord (23).

4. Ensemble de protection selon la revendication 3, **caractérisé en ce que** le deuxième évidement d'entraînement sous la forme de fente (28, 28') traverse la paroi (19) en direction radiale.

5. Ensemble de protection selon l'une quelconque des revendications précédentes, **caractérisé en ce que** le bol de protection (11) est conçu au moins en partie sous la forme d'un soufflet et
**en ce que** la bague d'entraînement (24) est réceptionnée entre deux plis (26, 26') voisins en direction axiale du soufflet.
